# EUROPEAN PATENT SPECIFICATION

(11) **EP 3 501 799 B1**
(45) Date of publication and mention of the grant of the patent: **05.08.2020**
(21) Application number: 17382866.6
(22) Date of filing: 19.12.2017
(51) Int. Cl.: B29C 64/25, B29C 64/364

(54) **IMPRESSION CHAMBER FOR ADDITIVE MANUFACTURING OF HIGH PERFORMANCE PLASTIC PARTS**
DRUCKKAMMER ZUR GENERATIVEN FERTIGUNG VON HOCHLEISTUNGSKUNSTSTOFFTEILEN
CHAMBRE D'IMPRESSION POUR FABRICATION ADDITIVE D'OBJECTS EN PLASTIQUE HAUTE PERFORMANCE

(43) Date of publication of application: 26.06.2019
(73) Proprietor: Airbus Operations, S.L., 28906 Getafe (ES)
(72) Inventor: GUINALDO FERNANDEZ, Enrique, 28906 Getafe (ES); JARA RODELGO, Alvaro, 28906 Getafe (ES); TORRES SALAS, Alvaro, 28906 MADRID (ES); HERNAIZ LOPEZ, Guillermo, 28906 Getafe (ES); LOPEZ ROMANO, Bernardo, 28906 getafe (ES); PICO BOLAÑO, Alejandro, 28906 getafe (ES); GARCIA MOSTOLES, Fernando, 28906 Getafe (ES)

(56) References cited:
- WO-A1-97/09125
- US-A1- 2015 217 514

## Description

### Object of the invention

The present invention refers to an impression chamber for additive manufacturing, and more specifically, for 3D printing of High Performance Plastics according to a Fused Filament Fabrication process.

An object of the invention is to provide an impression chamber capable of offering a simple and cost-effective solution for 3D printing of High Performance Plastics.

Another object of the invention is to provide an impression chamber for 3D printing of High Performance Plastics that is capable of providing melting and cooling conditions for such plastics in order to avoid the appearance of residual strengths in the printed piece.

Another object of the invention is to provide an impression chamber for 3D printing of High Performance Plastics that is capable of effectively protecting mechanic and electronic components of the 3D printer from the high temperatures reached in the chamber.

### Background of the invention

3D printing is a technique known for enabling a greater freedom to design and for reducing product development cycles, allowing rapid prototyping, piece production and mass customization.

Several materials can be used for 3D printing. Among them, High Performance Plastics meet higher requirements than other standard or engineering plastics because of their better mechanical properties, higher chemical and/or higher heat stability. For these reasons, High Performance Plastics are being increasingly used in many demanding applications of aeronautical and automotive industries, in which the reliability and performance of the materials are of extreme importance.

The use of these High Performance Plastics for Fused Filament Fabrication 3D printing requires reaching higher temperatures in the printing or impression chambers of the 3D printers. High Performance Plastics should be 3D printed at temperatures up to 400ºC, in contrast of temperatures around 180ºC required for other standard or engineering plastics. These higher temperatures allow the material to arrive at the melting condition, and ensure a proper fusion and a correct deposition of the material. The deposited material must be controllable cooled to avoid the appearance of residual strengths in the printed piece, which may induce warping and loss of mechanical properties in the piece.

Controlling the temperature in impression chambers of 3D printers becomes more important, and in some cases, critical, when the melting temperature of the printed material is higher, since insulation or protection for both the piece produced and the printer itself must be provided. For that, 3D printers intended to use High Performance Plastics, especially thermoplastics as the PAEK family (PEEK, PEKK, PAEK), PEI, PPS, PARA, PA, are provided with additional protection.

Solutions provided so far for thermally protecting the 3D printer and the printed piece require the protection of all electronic and mechanical elements which being sensitive to high temperatures are placed within the impression chamber.

Patent documents US2016039147A1 and US2004104515A1 disclose additive manufacturing systems for printing 3D parts that include heatable chambers in which all components are protected from temperatures reached inside.

Document US2015217514A1 describes an apparatus and a method for additive manufacturing in a sterile environment. The invention includes a major chamber large enough to accommodate the manufactured object, having sterile accordion pleated sidewalls and a sterile top closed with flap valves; a minor chamber for supporting the nozzles positioned above the major chamber having similar valves in corresponding positions; nozzles for material deposition penetrating the pair of valves to block air and particles from entry into the major chamber where the nozzles make layer by layer deposition of the object using XY areawise nozzle motion relative to the object as well as Z nozzle vertical motion with the major chamber expanding as the object is formed.

However, protecting all electronic and mechanical elements contained in the impression chamber of a 3D printer becomes a tedious and costly solution.

It would therefore be desirable to provide technical means that allow 3D printers to use High Performance Plastics in a cost-effective way, which at the same time, offer proper and desired conditions for 3D printing.

### Summary of the invention

The present invention overcomes the above mentioned drawbacks by providing an impression chamber for a 3D printer that offers a simple and cost-effective solution for 3D printing of High Performance Plastics.

The present invention refers to an impression chamber for a Fused Filament Fabrication 3D printer, said 3D printer adapted to receive a High Performance Plastic filament, and comprising a print head movable for providing successive layers of fused filaments deposited to form a piece, and a printing bed for supporting said deposition of layers. The impression chamber comprises a thermally insulated plate and at least one first polyimide film attached to the plate for delimiting a closed printing space in which a High Performance Plastic piece is to be printed. Thus, the invention provides a closed thermally insulated volume in which high temperatures for 3D printing can be reached.

The plate is dimensioned to have a surface at least equal or larger than the major surface of the piece to be printed. This way, the plate is large enough to cover the piece, and thus provide a thermal protection for the 3D printer, where the high temperatures reached down the plate do not transferred upwards from it.

Further, the at least one first polyimide film is dimensioned to surround the printing bed, to hold said printing bed within the printing space. Thus, a closed chamber is provided for performing 3D printing.

According to the invention, the plate is further provided with at least one first through-hole for allowing the passage of at least part of the print head, so that the plate is moved by the movement of the print head and the polyimide film is dragged by said movement providing a flexible and adaptable impression chamber.

In addition, the printing bed of the 3D printer has an upper surface on which the piece is to be printed, and a lower surface opposite to the upper surface, and according to the invention the impression chamber further comprises a second polyimide film sealed to the first polyimide film, wherein the first polyimide film is dimensioned to cover at least the upper surface of the printing bed and the second polyimide film is dimensioned to cover at least the lower surface of the printing bed.

With a thermally insulated plate and at least one first polyimide film, the invention provides a simple and economic impression chamber for a 3D printer intended to use High Performance Plastics for 3D printing.

In addition, the thermally insulated plate allows simple and effectively protecting the 3D printer, avoiding the need of complex systems for protecting sensible mechanic and electronic components of the 3D printer.

Also, the invention allows reaching melting conditions of High Performance Plastics and slows down the cooling of the deposited material. This way, the impression chamber avoids the appearance of residual strengths in the printed piece, responsible for inducing warping and loss of mechanical properties in the printed piece.

### Brief description of the drawings

For a better comprehension of the invention, the following drawings are provided for illustrative and non-limiting purposes, wherein:
Figure 1 shows a schematic perspective view of a state of the art Fused Filament Fabrication 3D printer adapted to use High Performance Plastics for 3D printing.
Figure 2 shows a schematic perspective view of an impression chamber for the 3D printer shown in Figure 1, according to the present invention.
Figure 3 shows a detailed view of the impression chamber shown in Figure 2 in which a plate is attached to a first polyimide film to delimit the printing space.
Figure 4 shows a detailed view of the plate arranged between the heat sink and the heater block of the print head, according to another preferred embodiment of the present invention.
Figure 5 shows a detailed view of the print head and the plate shown in Figure 4 in which the heat break is decoupled from the heatsink.
Figure 6 shows a detailed view of a plate according to a preferred embodiment of the present invention.
Figure 7 shows a perspective view of an impression chamber comprising a plate, and first and second polyimide films to delimit the printing space, according to the present invention.

### Preferred embodiments of the invention

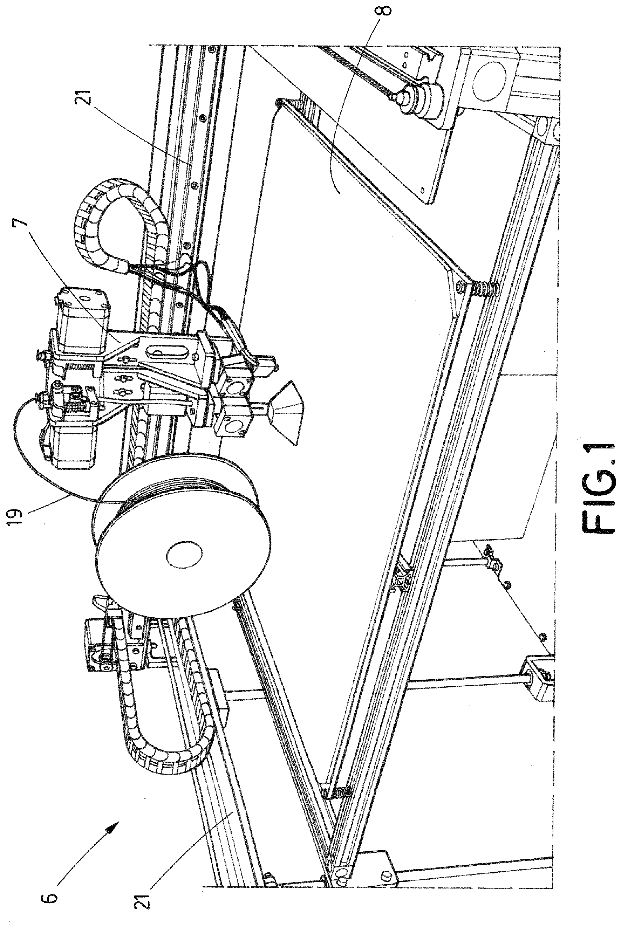

Figure 1 shows a state of the art Fused Filament Fabrication 3D printer 6. As shown, the 3D printer 6 is adapted to receive a High Performance Plastic filament 19 to heat it and obtain a High Performance Plastic fused filament for forming a piece 5. The 3D printer 6 comprises a print head 7 and a printing bed 8. The print head 7 is movable along longitudinal and transversal guides 21 for providing successive layers of fused filaments required for forming the piece 5. The printing bed 8 consists of a surface capable of supporting the deposition of layers for forming the piece 5.

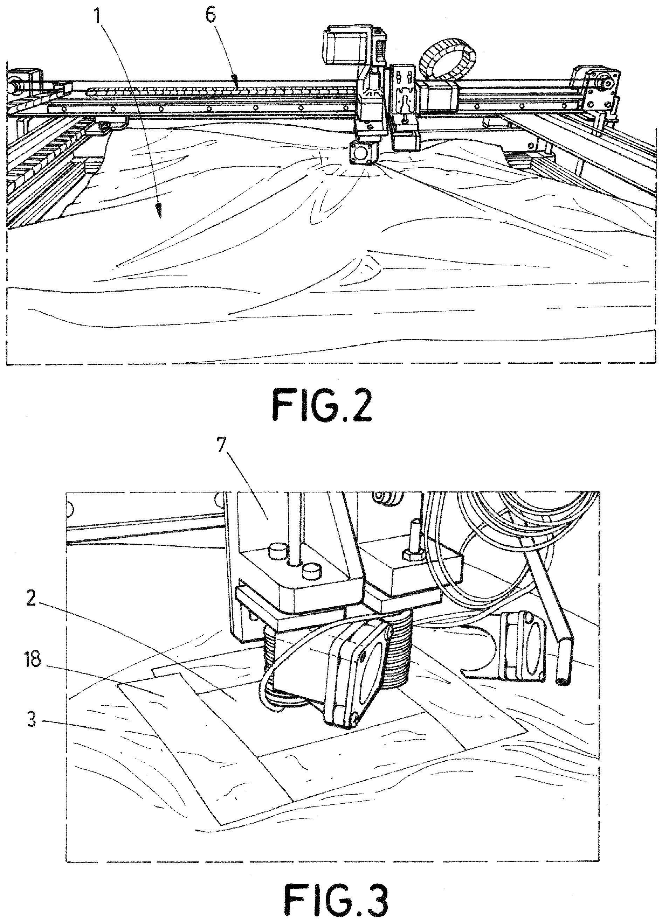

Figures 2 and 3 respectively shows a perspective and a detailed view of an impression chamber 1 for the 3D printer 6 shown in Figure 1. The impression chamber 1 comprises a thermally insulated plate 2 and a first polyimide film 3 attached to the plate 2 for delimiting a closed printing space 20 in which a High Performance Plastic piece 5 is to be printed.

As shown in Figure 3, the first polyimide film 3 is preferably attached to the plate 2 by polyimide adhesive tapes 18, and preferably, by Kapton adhesive tapes.

The plate 2 is dimensioned to have a surface 2a equal or larger than the major surface of the piece 5 to be printed, and the at least one first polyimide film 3 is dimensioned to surround the printing bed 8 to hold said printing bed 8 within the printing space 20. Thus, the printing space 20 of the impression chamber 6 is delimited by the plate 2 and the first polyimide film 3.

In addition, the plate 2 is further provided with at least one first through-hole 15 for allowing the passage of at least one part of the print head 7. This way, the plate 2 is configured to receive one part of the print head 7 and be attached to said print head 7. Being attached to the print head 7, the plate 2 can be moved with the movement of the print head 7, and the polyimide film 3 can be dragged by said movement. This provides a flexible and adaptable impression chamber 1.

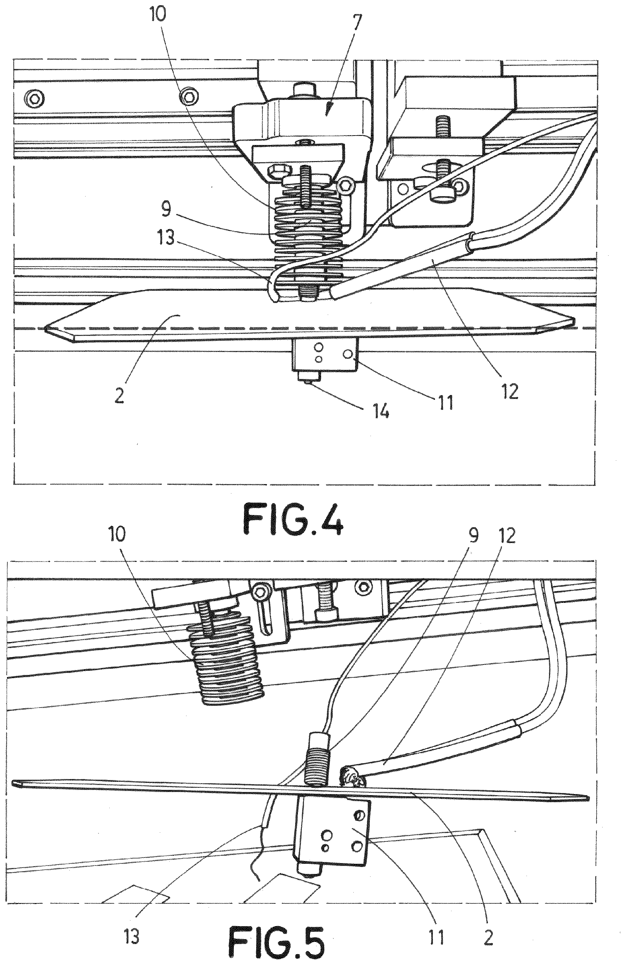

As shown in Figure 4 and according to a preferred embodiment, the print head 7 of the 3D printer 6 may comprise a heat break 9 adapted for receiving a High Performance Plastic filament 19, a heatsink 10 surrounding the heat break 9 for cooling the heat break 9, and a heater block 11 attached to the heat break 9 and adapted for heating the High Performance Plastic filament 19 to obtain a High Performance Plastic fused filament, wherein the first through-hole 15 of the plate 2 is dimensioned to allow the heat break 9 to pass, so that the plate 2 is arranged between the heat sink 10 and the heater block 11. With this configuration, the plate 2 is fixed to the print head 7 in such a way that insulation is provided to the thermally sensitive components of the 3D printer 6. Thus, the plate 2 creates a thermal interface in which a hot zone is defined downwards the plate 2 and a cold zone is defined upwards the plate 2. The invention thus provides a simple and effectively protection to the 3D printer, avoiding the need of complex systems for protecting sensible mechanic and electronic components of the 3D printer.

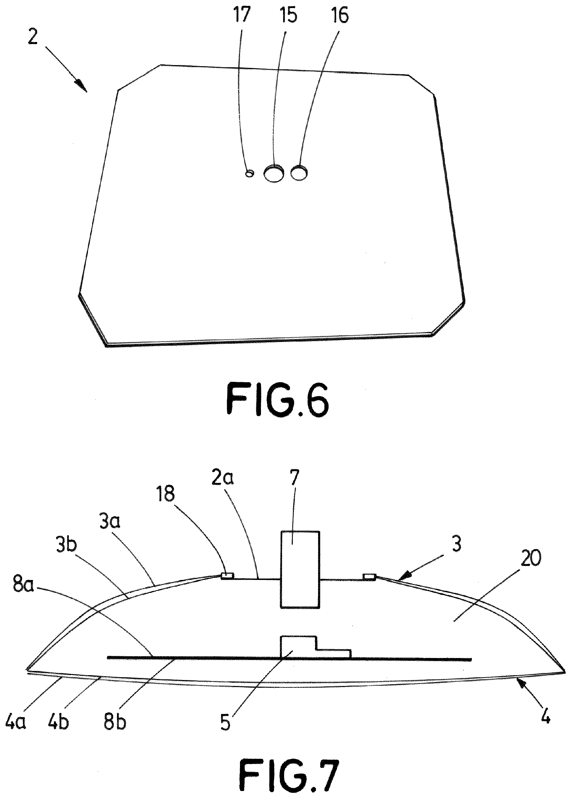

Figure 5 shows a detailed view of the print head 7 wherein the heat break 9 is decoupled from the heat sink 10. As shown, the plate 2 is preferably configured to allow the heat break 9 to pass through it, but also to allow a temperature sensor 13 and a heater cartridge 12 to pass through it. For that, as best shown in Figure 6 according to another preferred embodiment, the plate 2 is provided with three through-holes, a first through-hole 15 dimensioned to allow the heat break 9 to pass, a second through-hole 16 dimensioned to allow the heater cartridge 12 to pass to connect to the heater block 11, and a third through-hole 17 dimensioned to allow the temperature sensor 13 to pass for sensing the temperature inside the printing space 20. The temperature sensor 13 is adapted to sense temperature, and the heater cartridge 12 is adapted to feed the heater block 11, which is equipped with a nozzle 14 for ejection of the High Performance Plastic fused filament.

As shown in Figure 7, the printing bed 8 of the 3D printer 6 has an upper surface 8a on which the piece 5 is to be printed, and a lower surface 8b opposite to the upper surface, and the impression chamber 1 according to present invention further comprises a second polyimide film 4 sealed to the first polyimide film 3, wherein the first polyimide film 3 is dimensioned to cover at least the upper surface 8a of the printing bed 8 and the second polyimide film 4 is dimensioned to cover at least the lower surface 8b of the printing bed 8. These two polyimide films 3, 4 facilitate the forming and delimitation of the impression chamber 1.

According to a preferred embodiment, the polyimide film 3, 4 comprise at least one Kapton layer 3a, 4a. This Kapton layer provides the required insulation by withstanding the high temperatures (around 130ºC) needed for the use of High Performance Plastic filament for 3D printing. Further, the Kapton layer allows seeing the formation of the piece due to its translucency.

According to another preferred embodiment, the polyimide film 3, 4 further comprises of a glass fiber layer 3b, 4b, the Kapton layer 3a, 4a being disposed towards the outside of the printing space 20 and the glass fiber layer 3b, 4b being disposed towards the inside of the printing space 20. Having a Kapton layer and a glass fiber layer, the heat dissipation is reduced. Thus, the printed piece experiences a minor residual stresses by its cooling when deposited in the printing bed. This reduces the deformation of the printed pieces, leading to obtaining pieces with more regular geometry.

As the polyimide films 3, 4 are not fixed to the edges of the printing bed 8, the invention provides a flexible chamber 1 that allows the 3D printer 7 to perform its movements in the three Cartesian directions. When the print head 7 is located next to the limits of the printing bed 8, some small wrinkles can occur in the films 3, 4. However, these wrinkles do not collide with the printed part 5. Additionally, some tensor devices can be used to avoid the appearance of wrinkles and maintain the at least one first polyimide film 3, 4 separated from the printing bed 8.

## Claims

1. An impression chamber (1) for a 3D printer (6), the 3D printer (6) adapted to receive a High Performance Plastic filament (19) and comprising a print head (7) movable for providing successive layers of fused filaments deposited to form a piece (5), and a printing bed (8) for supporting said deposition of layers,
- wherein the impression chamber (1) comprises a thermally insulated plate (2) and at least one first polyimide film (3) attached to the plate (2) for delimiting a closed printing space (20) in which a High Performance Plastic piece (5) is to be printed,
- wherein the plate (2) is dimensioned to have a surface (2a) at least equal or larger than the major surface of the piece (5) to be printed;
- wherein the at least one first polyimide film (3) is dimensioned to surround the printing bed (8) to hold said printing bed (8) within the printing space (20),
- wherein the plate (2) is further provided with at least one first through-hole (15) for allowing the passage of at least part of the print head (7), so that the plate (2) is moved by the movement of the print head (7) and the polyimide film (3) is dragged by said movement providing a flexible and adaptable impression chamber (1),
whereby the printing bed (8) of the 3D printer (6) has an upper surface (8a) on which the piece (5) is to be printed, and a lower surface (8b) opposite to the upper surface, and wherein the impression chamber (1) further comprises a second polyimide film (4) sealed to the first polyimide film (3), wherein the first polyimide film (3) is dimensioned to cover at least the upper surface (8a) of the printing bed (8) and the second polyimide film (4) is dimensioned to cover at least the lower surface (8b) of the printing bed (8).

2. An impression chamber (1) for a 3D printer (6), according to any of the preceding claims, wherein the movable print head (7) of the 3D printer (6) comprises a heat break (9) adapted for receiving a High Performance Plastic filament (19), a heatsink (10) surrounding the heat break (9) for cooling the heat break (9), and a heater block (11) attached to the heat break (9) and adapted for heating the High Performance Plastic filament (19) to obtain a High Performance Plastic fused filament, wherein the first through-hole (15) of the plate (2) is dimensioned to allow the heat break (9) to pass so that the plate (2) can be arranged between the heat sink (10) and the heater block (11).

3. An impression chamber (1) for a 3D printer (6), according to claim 2, wherein the 3D printer (6) further comprises a heater cartridge (12) to feed the heater block (11), and wherein the plate (2) comprises a second through-hole (16) dimensioned to allow the heater cartridge (12) to pass for its connection with the heater block (11).

4. An impression chamber (1) for a 3D printer (6), according to any of claims 2-3, wherein the 3D printer (6) further comprises a temperature sensor (13) adapted to sense the temperature, and wherein the plate (2) comprises a third through-hole (17) dimensioned to allow the temperature sensor (13) to pass for sensing the temperature inside the printing space (20).

5. An impression chamber (1) for a 3D printer (6), according to any of the preceding claims, wherein the polyimide film (3, 4) comprises at least one Kapton layer (3a, 4a).

6. An impression chamber (1) for a 3D printer (6), according to claim 5, wherein the polyimide film (3, 4) further comprises of a glass fiber layer (3b, 4b), the Kapton layer (3a, 4a) being disposed towards the outside of the printing space (20) and the glass fiber layer (3b, 4b) being disposed towards the inside of the printing space (20).

7. An impression chamber (1) for a 3D printer (6), according to any of the preceding claims, wherein the plate (2) is made of glass fiber or ceramic.

8. An impression chamber (1) for a 3D printer (6), according to any of the preceding claims, wherein the plate (2) and the at least one first polyimide film (3) are attached by a polyimide adhesive tape (18).

9. An impression chamber (1) for a 3D printer (6), according to any of the preceding claims, wherein the impression chamber further comprises tensor devices to maintain the at least one first polyimide film (3, 4) separated from the printing bed (8).

## Patentansprüche

1. Druckkammer (1) für einen 3D-Drucker (6), wobei der 3D-Drucker (6) dafür ausgelegt ist, ein Filament (19) aus Hochleistungskunststoff aufzunehmen, und einen Druckkopf (7), der beweglich ist, um aufeinanderfolgende Schichten von verschmolzenen Filamenten bereitzustellen, die abgelagert sind, um ein Stück (5) zu bilden, und ein Druckbett (8) zum Tragen der Ablagerung von Schichten umfasst,
- wobei die Druckkammer (1) eine thermisch isolierte Platte (2) und mindestens eine erste Polyimidfolie (3), die an der Platte (2) angebracht ist, zum Abgrenzen eines geschlossenen Druckraums (20), in dem ein Stück (5) aus Hochleistungskunststoff gedruckt werden soll, umfasst,
- wobei die Platte (2) so bemessen ist, eine Oberfläche (2a) aufzuweisen, die mindestens gleich oder größer als die Hauptoberfläche des zu druckenden Stücks (5) ist;
- wobei die mindestens eine erste Polyimidfolie (3) so bemessen ist, dass sie das Druckbett (8) umgibt, um das Druckbett (8) innerhalb das Druckraums (20) zu halten,
- wobei die Platte (2) ferner mit mindestens einem ersten Durchgangsloch (15) versehen ist, um den Durchgang von mindestens einem Teil des Druckkopfes (7) zu erlauben, so dass die Platte (2) durch die Bewegung des Druckkopfes (7) bewegt wird und die Polyimidfolie (3) durch die Bewegung mitgezogen wird, wodurch eine biegsame und anpassbare Druckkammer (1) bereitstellt wird,
wobei das Druckbett (8) des 3D-Druckers (6) eine obere Oberfläche (8a), auf der das Stück (5) gedruckt werden soll, und eine untere Oberfläche (8b) gegenüber der oberen Oberfläche aufweist und wobei die Druckkammer (1) ferner eine zweite Polyimidfolie (4) umfasst, die mit der ersten Polyimidfolie (3) verschweißt ist, wobei die erste Polyimidfolie (3) so bemessen ist, dass sie mindestens die obere Oberfläche (8a) des Druckbetts (8) abdeckt, und die zweite Polyimidfolie (4) so bemessen ist, dass sie mindestens die untere Oberfläche (8b) des Druckbetts (8) abdeckt.

2. Druckkammer (1) für einen 3D-Drucker (6) nach einem der vorhergehenden Ansprüche, wobei der bewegliche Druckkopf (7) des 3D-Druckers (6) einen Wärmeunterbrecher (9), der dafür ausgelegt ist, ein Filament (19) aus Hochleistungskunststoff aufzunehmen, einen Kühlkörper (10), der den Wärmeunterbrecher (9) umgibt, um den Wärmeunterbrecher (9) zu kühlen, und einen Erwärmungsblock (11), der an dem Wärmeunterbrecher (9) angebracht ist und zum Erwärmen des Filaments (19) aus Hochleistungskunststoff ausgelegt ist, um ein geschmolzenes Filament aus Hochleistungskunststoff zu erhalten, umfasst, wobei das erste Durchgangsloch (15) der Platte (2) so bemessen ist, dass es möglich ist, dass der Wärmeunterbrecher (9) hindurchgeht, so dass die Platte (2) zwischen dem Kühlkörper (10) und dem Erwärmungsblock (11) angeordnet werden kann.

3. Druckkammer (1) für einen 3D-Drucker (6) nach Anspruch 2, wobei der 3D-Drucker (6) ferner eine Erwärmungspatrone (12) umfasst, um den Erwärmungsblock (11) zu speisen, und wobei die Platte (2) ein zweites Durchgangsloch (16) umfasst, das so bemessen ist, dass es möglich ist, dass die Erwärmungspatrone (12) für ihre Verbindung mit dem Erwärmungsblock (11) hindurchgeht.

4. Druckkammer (1) für einen 3D-Drucker (6) nach einem der Ansprüche 2-3, wobei der 3D-Drucker (6) ferner einen Temperatursensor (13) umfasst, der dafür ausgelegt ist, die Temperatur zu erfassen, und wobei die Platte (2) ein drittes Durchgangsloch (17) umfasst, das so bemessen ist, dass es möglich ist, dass der Temperatursensor (13) zum Erfassen der Temperatur durch den Druckraum (20) hindurchgeht.

5. Druckkammer (1) für einen 3D-Drucker (6) nach einem der vorhergehenden Ansprüche, wobei die Polyimidfolie (3, 4) mindestens eine Kapton-Schicht (3a, 4a) umfasst.

6. Druckkammer (1) für einen 3D-Drucker (6) nach Anspruch 5, wobei die Polyimidfolie (3, 4) ferner eine Glasfaserschicht (3b, 4b) umfasst, wobei die Kapton-Schicht (3a, 4a) in Richtung der Außenseite des Druckraums (20) angeordnet ist und die Glasfaserschicht (3b, 4b) in Richtung der Innenseite des Druckraums (20) angeordnet ist.

7. Druckkammer (1) für einen 3D-Drucker (6) nach einem der vorhergehenden Ansprüche, wobei die Platte (2) aus Glasfaser oder Keramik hergestellt ist.

8. Druckkammer (1) für einen 3D-Drucker (6) nach einem der vorhergehenden Ansprüche, wobei die Platte (2) und die mindestens eine erste Polyimidfolie (3) durch ein Polyimidklebeband (18) verbunden sind.

9. Druckkammer (1) für einen 3D-Drucker (6) nach einem der vorhergehenden Ansprüche, wobei die Druckkammer ferner Spannvorrichtungen umfasst, um die mindestens eine erste Polyimidfolie (3, 4) von dem Druckbett (8) getrennt zu halten.

## Revendications

1. Chambre d'impression (1) pour une imprimante 3D (6), l'imprimante 3D (6) étant adaptée pour recevoir un filament de plastique haute performance (19) et comprenant une tête d'impression (7) mobile pour fournir des couches successives de filaments fondus déposées pour former une pièce (5), et un lit d'impression (8) pour supporter ledit dépôt de couches,
- la chambre d'impression (1) comprenant une plaque isolée thermiquement (2) et au moins un premier film de polyimide (3) attaché à la plaque (2) pour délimiter un espace d'impression fermé (20) dans lequel une pièce en plastique haute performance (5) doit être imprimée,
- la plaque (2) étant dimensionnée pour avoir une surface (2a) au moins égale ou supérieure à la surface principale de la pièce (5) à imprimer ;
- l'au moins un premier film de polyimide (3) étant dimensionné pour entourer le lit d'impression (8) pour maintenir ledit lit d'impression (8) à l'intérieur de l'espace impression (20),
- la plaque (2) étant également pourvue d'au moins un premier trou débouchant (15) pour permettre le passage d'au moins une partie de la tête d'impression (7), de telle sorte que la plaque (2) est déplacée par le mouvement de la tête d'impression (7) et le film de polyimide (3) est tiré par ledit mouvement, fournissant une chambre d'impression flexible et adaptable (1),
le lit d'impression (8) de l'imprimante 3D (6) ayant une surface supérieure (8a) sur laquelle la pièce (5) doit être imprimée, et une surface inférieure (8b) à l'opposé de la surface supérieure, et la chambre d'impression (1) comprenant en outre un deuxième film de polyimide (4) scellé au premier film de polyimide (3), le premier film de polyimide (3) étant dimensionné pour couvrir au moins la surface supérieure (8a) du lit d'impression (8) et le deuxième film de polyimide (4) étant dimensionné pour couvrir au moins la surface inférieure (8b) du lit d'impression (8).

2. Chambre d'impression (1) pour une imprimante 3D (6), selon l'une quelconque des revendications précédentes, la tête d'impression mobile (7) de l'imprimante 3D (6) comprenant une rupture thermique (9) adaptée pour recevoir un filament de plastique haute performance (19), un dissipateur thermique (10) entourant la rupture thermique (9) pour refroidir la rupture thermique (9), et un bloc chauffant (11) attaché à la rupture thermique (9) et adapté pour chauffer le filament de plastique haute performance (19) pour obtenir un filament de plastique haute performance fondu, le premier trou traversant (15) de la plaque (2) étant dimensionné pour laisser passer la rupture thermique (9) de telle sorte que la plaque (2) peut être disposée entre le dissipateur thermique (10) et le bloc chauffant (11).

3. Chambre d'impression (1) pour une imprimante 3D (6), selon la revendication 2, l'imprimante 3D (6) comprenant en outre une cartouche chauffante (12) pour alimenter le bloc chauffant (11), et la plaque (2) comprenant un deuxième trou traversant (16) dimensionné pour laisser passer la cartouche chauffante (12) pour son raccordement avec le bloc chauffant (11).

4. Chambre d'impression (1) pour une imprimante 3D (6), selon l'une quelconque des revendications 2 et 3, l'imprimante 3D (6) comprenant en outre un capteur de température (13) adapté pour détecter la température, et la plaque (2) comprenant un troisième trou traversant (17) dimensionné pour laisser passer le capteur de température (13) pour détecter la température à l'intérieur de l'espace d'impression (20).

5. Chambre d'impression (1) pour une imprimante 3D (6), selon l'une quelconque des revendications précédentes, le film de polyimide (3, 4) comprenant au moins une couche de Kapton (3a, 4a).

6. Chambre d'impression (1) pour une imprimante 3D (6), selon la revendication 5, le film de polyimide (3, 4) comprenant en outre une couche de fibre de verre (3b, 4b), la couche de Kapton (3a, 4a) étant disposée vers l'extérieur de l'espace d'impression (20) et la couche de fibre de verre (3b, 4b) étant disposée vers l'intérieur de l'espace d'impression (20).

7. Chambre d'impression (1) pour une imprimante 3D (6), selon l'une quelconque des revendications précédentes, la plaque (2) étant constitué de fibre de verre ou de céramique.

8. Chambre d'impression (1) pour une imprimante 3D (6), selon l'une quelconque des revendications précédentes, la plaque (2) et l'au moins un premier film de polyimide (3) étant attachés par un ruban adhésif en polyimide (18).

9. Chambre d'impression (1) pour une imprimante 3D (6), selon l'une quelconque des revendications précédentes, la chambre d'impression comprenant en outre des dispositifs de tension pour maintenir l'au moins un premier film de polyimide (3, 4) séparé du lit d'impression (8).
